# EUROPÄISCHE PATENTSCHRIFT

(11) **EP 2 684 775 B1**
(45) Veröffentlichungstag und Bekanntmachung des Hinweises auf die Patenterteilung: **08.03.2017**
(21) Anmeldenummer: 13001179.4
(22) Anmeldetag: 09.03.2013
(51) Int. Cl.: B62D 21/02, B60K 15/063

(54) **Rahmentragstruktur mit Tankeinrichtung**
Chassis structure with a tank arrangement
Châssis de véhicule avec un arrangement d'un réservoir

(30) Priorität: 13.07.2012 DE 102012013900
(43) Veröffentlichungstag der Anmeldung: 15.01.2014
(73) Patentinhaber: MAN Truck & Bus AG, 80995 München (DE)
(72) Erfinder: Sattler, Steve, 81375 München (DE); Hintereder, Jürgen, 80997 München (DE)
(74) Vertreter: v. Bezold & Partner Patentanwälte - PartG mbB

(56) Entgegenhaltungen:
- DE-A1-102004 013 348
- GB-A- 2 001 591
- GB-A- 2 416 744
- JP-A- H 092 323
- US-A- 5 380 042
- US-A1- 2005 062 251
- US-A1- 2005 211 486
- US-B1- 6 203 065

## Beschreibung

Die Erfindung betrifft eine Rahmentragstruktur für ein Nutzfahrzeug, insbesondere einen Lastkraftwagen, vorzugsweise eine Sattelzugmaschine.

Rahmentragstrukturen, insbesondere Fahrgestelle, für Sattelzugmaschinen sind in den unterschiedlichsten Ausführungsformen bekannt. Die Rahmentragstrukturen umfassen üblicherweise zwei Längsträger und mehrere Querträger. Ebenso sind Kraftstofftanks zur Aufnahme eines Kraftstoffs zum Betrieb einer Motoreinrichtung zum Antreiben der Sattelzugmaschinen in den unterschiedlichsten Ausführungsformen bekannt. Üblicherweise werden die Kraftstofftanks von seitlich außen an die Längsträger befestigt. Die Kraftstofftanks umfassen oft ein Fassungsvermögen von bis zu 600 Litern und nehmen deshalb einerseits relativ viel Raum ein und andererseits weisen sie in befülltem Zustand ein beachtliches Gewicht auf. Nachteilhaft an Rahmentragstrukturen mit an Längsträgern seitlich außen befestigten Kraftstofftanks ist zu., dass im Falle einer dynamischen Anregung etwa durch eine Bodenwelle, die Längsträger erheblich belastet werden und zwar zudem ungünstig, quasi exzentrisch- Außerdem ist die Montage der Kraftstofftanks an die Längsträger aufwendig- Zum Stand der Technik kann noch auf die US 2005/211486 A1, die US 5 380 042 A, die US 6 203 065 B1, die US 2005/062251 A1, die JP H09 2323 A, die DE 10 2004 013348 A1, die GB 2 416 744 A und die GB 2001 591 A verwiesen werden.

Eine Aufgabe der Erfindung ist es, eine verbesserte und/oder alternative Rahmentragstruktur für ein Nutzfahrzeug zu schaffen.

Diese Aufgabe kann insbesondere mit den Merkmalen des Hauptanspruchs gelöst werden. Vorteilhafte Weiterbildungen sind den Unteransprüchen zu entnehmen.

Die Erfindung schafft eine Rahmentragstruktur für ein Nutzfahrzeug, insbesondere eine Zugmaschine. Die Rahmentragstruktur dient vorzugsweise zum Tragen eines Fahrerhauses und ist z.B. mit einer Vorderachse und zumindest einer Hinterachse versehen. Die Rahmentragstruktur umfasst eine erste längsverlaufende Tragkonstruktion und eine zweite längsverlaufende Tragkonstruktion, die in Querrichtung der Rahmentragstruktur voneinander beabstandet sind. Die Rahmentragstruktur umfasst ferner zumindest eine Tankeinrichtung zur Fluidaufnahme, z.B. einen Kraftstofftank zur Aufnahme von Kraftstoff zum Betrieb einer Motoreinrichtung für das Nutzfahrzeug und/oder einen Lufttank zur Aufnahme von Luft.

Die Rahmentragstruktur zeichnet sich dadurch aus, dass die Tankeinrichtung zumindest abschnittsweise zwischen der ersten Tragkonstruktion und der zweiten Tragkonstruktion angeordnet ist.

Die Tankeinrichtung verläuft zumindest abschnittsweise zwischen Vorderrädern für das Nutzfahrzeug verläuft und ragt über deren Radmittelpunkte nach vorne hinaus. Ergänzend kann die Tankeinrichtung zumindest abschnittsweise zwischen Hinterrädern für das Nutzfahrzeug verlaufen und z.B. über deren Radmittelpunkte in Längsrichtung nach hinten hinausragen.

Vorzugsweise verläuft die Tankeinrichtung von der ersten Tragkonstruktion zu der zweiten Tragkonstruktion und verbindet zweckmäßig somit die erste Tragkonstruktion mit der zweiten Tragkonstruktion.

Die Tankeinrichtung kann abschnittsweise in Querrichtung der Rahmentragstruktur vorzugsweise mittig zwischen der ersten Tragkonstruktion und der zweiten Tragkonstruktion angeordnet sein und somit insbesondere die Längsmittenachse der Rahmentragstruktur queren.

Es ist möglich, dass die Tankeinrichtung die erste Tragkonstruktion und die zweite Tragkonstruktion abschnittsweise einfasst, vorzugsweise von unten und/oder von seitlich außen.

Die Tankeinrichtung kann z.B. Durchlassaussparungen aufweisen, die von der ersten Tragkonstruktion und der zweiten Tragkonstruktion durchlaufen werden. In diesem Fall verlaufen die erste Tragkonstruktion und die zweite Tragkonstruktion zweckmäßig durch die Tankeinrichtung hindurch.

Es ist zudem möglich, dass die Tankeinrichtung unter einer Motoreinrichtung zum Antreiben des Nutzfahrzeugs (z.B. ein Verbrennungsmotor, Dieselmotor und/oder Elektromotor) und/oder unter einer Getriebeeinrichtung für das Nutzfahrzeug verläuft. Alternativ oder ergänzend kann die Tankeinrichtung z.B. einen Aufnahmeraum schaffen, der dazu dient, eine Antriebstrangeinheit (z.B. eine Getriebeeinrichtung und/oder Motoreinrichtung zum Antreiben des Nutzfahrzeugs, etwa ein Verbrennungsmotor, Dieselmotor und/oder Elektromotor) aufzunehmen und z.B. zumindest abschnittsweise einzufassen, vorzugsweise von unten und/oder von seitlich außen.

Die Tankeinrichtung wird vorzugsweise aus einem oder mehreren im Wesentlichen hohlplattenförmigen Tankabschnitten ausgebildet. Ein hohlplattenförmiger Tankabschnitt kann z.B. im Wesentlichen horizontal ausgerichtet sein. Ein anderer hohlplattenförmiger Tankabschnitt kann z.B. im Wesentlichen vertikal ausgerichtet sein. Es ist möglich, dass der zumindest eine hohlplattenförmige Tankabschnitt die erste Tragkonstruktion mit der zweiten Tragkonstruktion verbindet und/oder baulich in die erste Tragkonstruktion und die zweite Tragkonstruktion integriert ist.

Die Tankeinrichtung kann z.B. ein im Wesentlichen hohlplattenförmiges Bodenteil und zwei im Wesentlichen hohlplattenförmige äußere Schenkelteile umfassen, die vorzugsweise eine im Wesentlichen U-förmige Gestalt bilden.

Es ist ebenso möglich, dass die Tankeinrichtung einen im Wesentlichen horizontalen Flanschteil und einen von dem Flanschteil erstreckenden Stegteil umfasst, die vorzugsweise eine im Wesentlichen L-, T- oder V-förmige Gestalt bilden.

Die Tankeinrichtung kann z.B. zumindest ein Schwallblech und/oder zumindest ein Verstärkungsmittel umfassen. Das Schwallblech und/oder das Verstärkungsmittel sorgt insbesondere dafür, dass die Tankeinrichtung z.B. als mittragender Teil der Rahmentragstruktur wirken kann. Das Verstärkungsmittel ist z.B. als zumindest eine Verstärkungsrippe, Verstärkungsverstrebung, Verstärkungsplatte und/oder gitterrahmenförmige Unterzugkonstruktion, etc. ausgebildet.

Die Rahmentragstruktur kann ferner eine dritte längsverlaufende Tragkonstruktion umfassen, die zwischen der ersten Tragkonstruktion und der zweiten Tragkonstruktion verläuft und zweckmäßig unter deren Niveau. Die dritte Tragkonstruktion kann z.B. zwischen den Vorderrädern für das Nutzfahrzeug verlaufen und vorzugsweise über deren Radmittelpunkte z.B. in Längsrichtung der Rahmentragstruktur nach vorne hinausragen.

Die dritte Tragkonstruktion kann z.B. zur Abstützung der Tankeinrichtung und/oder zur Abstützung der Motoreinrichtung zum Antreiben des Nutzfahrzeugs dienen und vorzugsweise darunter verlaufen. Alternativ oder ergänzend kann die dritte Tragkonstruktion zur Aufnahme von Längs- und/oder Querkräften der Lenkelemente der Radaufhängungen für die Vorderräder dienen und zweckmäßig mit selbigen verbunden sein.

Die erste Tragkonstruktion, die zweite Tragkonstruktion und/oder die dritte Tragkonstruktion sind zumindest abschnittsweise vorzugsweise aus Hohlprofilelementen ausgeführt, z.B. runden oder rechteckförmigen Hohlprofilelementen. Alternativ oder ergänzend können sie auch z.B. aus U-, I- oder L-Profilelementen ausgeführt werden.

Es ist möglich, dass die erste Tragkonstruktion und die zweite Tragkonstruktion in eine Oberzugkonstruktion und eine Unterzugkonstruktion aufgeteilt sind. Die Oberzugkonstruktion kann z.B. über dem Niveau der Radmittelpunkte der Vorderräder verlaufen und die Unterzugkonstruktion darunter.

Die erste Tragkonstruktion und die zweite Tragkonstruktion können z.B. aus Tragprofilelementen (z.B. Hohlprofilelementen, U-Profilelementen, I-Profilelementen, etc.) ausgebildet werden. Es ist jedoch auch möglich, dass die erste Tragkonstruktion und die zweite Tragkonstruktion aus z.B. halbschalenförmigem Blech- oder Tiefziehmaterial (z.B. Blechumformelemente) gefertigt sind und z.B. mit Verstärkungsmitteln versehen sind, wie etwa Verstärkungsrippen, Verstärkungsplatten, Verstärkungsstreben, etc.. Ebenso kann die Tankeinrichtung aus z.B. halbschalenförmigem Blech- oder Tiefziehmaterial (z.B. Blechumformelemente) gefertigt sein und z.B. mit Verstärkungsmitteln versehen werden, wie etwa Verstärkungsrippen, Verstärkungsstreben, Verstärkungsplatten, etc..

Die Tankeinrichtung, die erste Tragkonstruktion und/oder die zweite Tragkonstruktion kann mit zumindest einer Lüftungsöffnung versehen sein, die zweckmäßig zur Kühlung einer Motoreinrichtung zum Antreiben des Nutzfahrzeugs dient (z.B. ein Verbrennungsmotor, Dieselmotor und/oder Elektromotor). Die Lüftungsöffnung kann z.B. in Längsrichtung, in Querrichtung oder diagonal ausgerichtet sein.

Es ist möglich, dass die Tankeinrichtung z.B. innenseitig zumindest abschnittsweise mit Dichtmaterial, insbesondere Kunststoff, ausgekleidet ist. Zudem ist es möglich, dass ein Kunststofftank in die Tankeinrichtung eingebaut ist, der die Fluidaufnahme übernimmt. Es ist möglich, dass die Tankeinrichtung oben auf der ersten Tragkonstruktion und der zweiten Tragkonstruktion angeordnet ist und somit insbesondere oben auf der ersten Tragkonstruktion und der zweiten Tragkonstruktion gelagert sein. Es ist ferner möglich, dass die Tankeinrichtung oben auf oberen Enden der Feder- und/oder Dämpferelemente der Radaufhängungen für die Vorderräder des Nutzfahrzeugs angeordnet ist und somit insbesondere auf den oberen Enden der Feder- und/oder Dämpferelemente gelagert ist.

Es ist möglich, dass die Tankeinrichtung als Unterbau für das Fahrerhaus dient (z.B. Unterboden).

Es ist möglich, dass die Rahmentragstruktur zumindest eine Queraussteifungskonstruktion umfasst, die zusätzlich als Lufttank für das Nutzfahrzeug dient und/oder die im Wesentlichen hohlplattenförmig ausgebildet ist.

Zu erwähnen ist, dass das Merkmal "zwischen" insbesondere so zu verstehen ist, dass es vorzugsweise die Positionierung in Querrichtung und/oder in Längsrichtung definiert, während die Positionierung in Vertikalrichtung nicht eingeschränkt wird, es sei denn, die Positionierung in Vertikalrichtung wird ausdrücklich spezifiziert.

Zu erwähnen ist auch, dass das Merkmal "mittragend" vorzugsweise so zu verstehen ist, dass es insbesondere verstärkend, aussteifend, tragend, fahrwerkslastenweiterleitend und/oder abstützend wirkt oder zumindest mitwirkt.

Außerdem ist noch zu erwähnen, dass die Tankeinrichtung einen oder mehrere Tankabschnitte umfassen kann.

Zu erwähnen ist noch, dass die erfindungsgemäße Rahmentragstruktur bzw. die erste Tragkonstruktion und die zweite Tragkonstruktion insbesondere nicht auf zumindest abschnittsweise aus Tragprofilelementen (z.B. Hohl-, U-, I- oder L-Tragprofilelemente) ausgeführte (z.B. leiterrahmenförmige) Ausführungsformen beschränkt ist, sondern z.B. auch zumindest abschnittsweise monocoqueförmige oder semi-monocoqueförmige Ausführungsformen umfasst. Darunter werden insbesondere schalenförmige Strukturen verstanden, die zweckmäßig selbsttragend ausgebildet sind (z.B. aus Blech-, Tiefzieh- oder Verbundmaterial).

Die Erfindung umfasst außerdem ein Nutzfahrzeug, insbesondere einen Lastkraftwagen, vorzugsweise eine Sattelzugmaschine, mit einer wie hierin beschriebenen Rahmentragstruktur.

Die vorstehend beschriebenen Merkmale und bevorzugten Ausführungsformen der Erfindung sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsformen der Erfindung in Verbindung mit den beigefügten Figuren.
- Fig. 1: zeigt eine perspektivische Ansicht einer Rahmentragstruktur für ein Nutzfahrzeug gemäß einer Ausführungsform der Erfindung,
- Fig. 2: zeigt eine Seitenansicht der Rahmentragstruktur der Figur 1,
- Fig. 3: zeigt eine Draufsicht auf die Rahmentragstruktur der Figuren 1 und 2,
- Fig. 4: zeigt eine Schnittansicht der Rahmentragstruktur der Figuren 1 bis 3,
- Fig. 5: zeigt eine perspektivische Ansicht einer Rahmentragstruktur gemäß einer anderen Ausführungsform der Erfindung,
- Fig. 6: zeigt eine Draufsicht auf die Rahmentragstruktur der Figur 5,
- Fig. 7: zeigt eine Schnittansicht der Rahmentragstruktur der Figuren 5 und 6,
- Fig. 8: zeigt eine perspektivische Ansicht einer Rahmentragstruktur gemäß einer wiederum anderen Ausführungsform der Erfindung,
- Fig. 9: zeigt eine Draufsicht auf die Rahmentragstruktur der Figur 8, und
- Fig. 10: zeigt eine Schnittansicht der Rahmentragstruktur der Figuren 8 und 9.

Die unter Bezugnahme auf die Figuren beschriebenen Ausführungsformen stimmen teilweise überein, wobei ähnliche oder identische Teile mit den gleichen Bezugszeichen versehen sind und zu deren Erläuterung auch auf die Beschreibung anderer Ausführungsformen oder Figuren verwiesen wird, um Wiederholungen zu vermeiden.

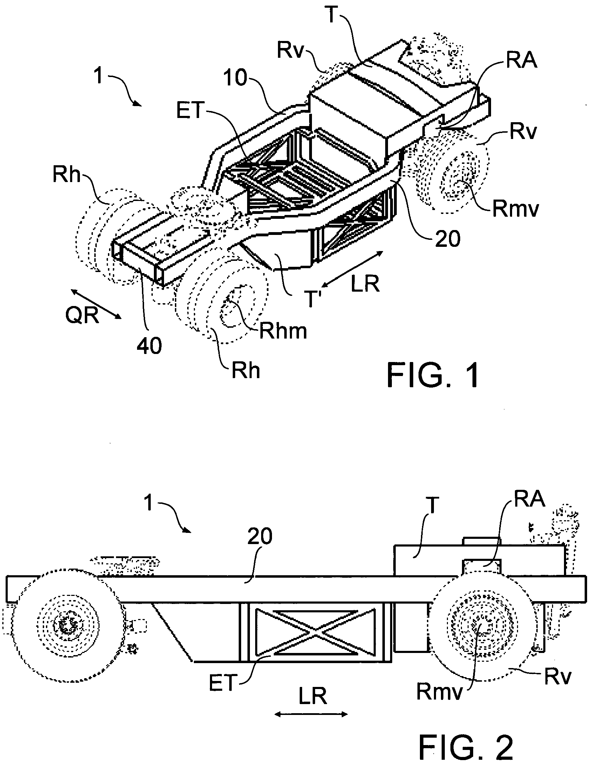

Figur 1 zeigt eine perspektivische Ansicht einer ein Fahrgestell für eine Zugmaschine (Sattelzugmaschine) bildenden Rahmentragstruktur 1, die mit einer Sattelplatte versehen ist und mitunter zum Tragen eines Fahrerhauses (nicht dargestellt) für die Zugmaschine dient.

Die Rahmentragstruktur 1 umfasst eine erste in Längsrichtung LR der Rahmentragstruktur 1 verlaufende Tragkonstruktion 10 und eine zweite in Längsrichtung LR der Rahmentragstruktur 1 verlaufende Tragkonstruktion 20, die in Querrichtung QR der Rahmentragstruktur 1 voneinander beabstandet sind und als Rechteckhohlprofile ausgeführt sind. Die Rahmentragstruktur 1 umfasst ferner mehrere Querträger, z.B. einen in Figur 1 zu sehenden hinteren Querträger 40, der ebenfalls als Rechteckhohlprofil ausgeführt ist.

Die Rahmentragstruktur 1 ist frontseitig mit einer Kühleranordnung versehen, die einen Motorkühler und einen Ladeluftkühler umfasst. Die Rahmentragstruktur 1 ist zudem mit mit lenkbaren Vorderrädern Rv und einer Hinterachse mit Hinterrädern Rh versehen. Die Vorderräder Rv verfügen über Radaufhängungen RA und umfassen Radmittelpunkte Rmv, um die sie drehbar sind. Ähnlich umfassen die Hinterräder Rh Radmittelpunkte Rmh, um die sie drehbar sind. Die Hinterräder Rh sind zwillingsbereift, können aber auch einzelbereift ausgeführt werden. Ebenso ist es möglich, dass die Rahmentragstruktur 1 mit mehr als einer Hinterachse versehen wird. Die Rahmentragstruktur 1 kann zudem z.B. mit einer Motoreinrichtung zum Antreiben des Nutzfahrzeugs (z.B. ein Verbrennungsmotor, Dieselmotor und/oder Elektromotor), einer Getriebeeinrichtung und ggf. weiteren Antriebsstrangeinrichtungen und Nutzfahrzeugkomponenten versehen werden (nicht dargestellt). Die Rahmentragstruktur 1 umfasst ferner einen Kraftstofftank T und zudem einen Lufttank T'.

Zunächst ist eine Besonderheit der in Figur 1 gezeigten Rahmentragstruktur 1, dass sie über eine selbsttragende, demontierbare Tragvorrichtung ET verfügt, die dazu dient, die Motoreinrichtung und optional die Getriebeeinrichtung aufzunehmen und zu tragen. Die Tragvorrichtung ET kann zudem so ausgeführt sein, dass sie als mittragender Teil der Rahmentragstruktur 1 wirken kann, z.B. als Queraussteifungskonstruktion. Eine weitere Besonderheit ist, dass die erste Tragkonstruktion 10 und die zweite Tragkonstruktion 20 zwischen dem die Vorderräder Rv umfassenden Vorderradaufbau und dem die Hinterräder umfassenden Hinterradaufbau nach seitlich außen geführt sind und somit eine aufgeweitete, mittlere Tragstruktur bilden, zwischen der sich die Tragvorrichtung ET erstreckt.

Der Kraftstofftank T verläuft abschnittsweise zwischen der ersten Tragkonstruktion 10 und der zweiten Tragkonstruktion 20. Insbesondere verläuft der Kraftstofftank T abschnittsweise zwischen den Vorderrädern Rv und ragt über deren Radmittelpunkte Rmv nach vorne hinaus. Der Kraftstofftank T verläuft mittig zwischen der ersten Tragkonstruktion 10 und der zweiten Tragkonstruktion 20 und verbindet die erste Tragkonstruktion 10 mit der zweiten Tragkonstruktion 20.

Der Kraftstofftank T umfasst insbesondere einen im Wesentlichen horizontal ausgerichteten Tankabschnitt, der die erste Tragkonstruktion 10 und die zweite Tragkonstruktion 20 verbindet. Zudem verläuft der horizontal ausgerichtete Tankabschnitt zwischen den Vorderrädern Rv, ragt über deren Radmittelpunkt Rmv nach vorne hinaus und ist über dem Niveau der ersten Rahmentragstruktur 10 und der zweiten Rahmentragstruktur 20 angeordnet. Insbesondere ist der horizontal ausgerichtete Tankabschnitt oben auf Feder- und/oder Dämpferelementen der Radaufhängungen RA für die Vorderräder Rv angeordnet und zudem oben auf der ersten Tragkonstruktion 10 und der zweiten Tragkonstruktion 20. Der Kraftstofftank T, insbesondere der horizontal ausgerichtete Tankabschnitt, dient dazu, ein Fahrerhaus (nicht dargestellt) für das Nutzfahrzeug zu tragen, das über dem Kraftstofftank T platziert wird. Das Fahrerhaus per se kann im Wesentlichen gemäß Stand der Technik ausgeführt sein. Zudem kann der Kraftstofftank T, insbesondere der horizontale ausgerichtete Tankabschnitt, als Unterbau (z.B. Bodenplatte) für das Fahrerhaus dienen.

Zudem umfasst der Kraftstofftank T einen im Wesentlichen vertikal ausgerichteten Tankabschnitt, der ebenfalls die erste Tragkonstruktion 10 und die zweite Tragkonstruktion 20 verbindet. Der vertikal ausgerichtete Stegteil verläuft in Längsrichtung LR hinter den Vorderrädern Rv, steht von dem horizontal ausgerichteten Tankabschnitt nach unten ab und erstreckt sich sowohl über dem Niveau der ersten Rahmentragstruktur 10 und der zweiten Rahmentragstruktur 20 als auch darunter.

Wie in Figur 1 zu sehen ist, sind sowohl der horizontal ausgerichtete Tankabschnitt als auch der vertikal ausgerichtete Tankabschnitt im Wesentlichen hohlplattenförmig ausgebildet.

Zu erwähnen ist, dass der horizontal ausgerichtete Tankabschnitt und der vertikal ausgerichtete Tankabschnitt als Kraftstofftank ausgeführt sind. Es ist aber möglich, dass z.B. der vertikal ausgerichtete Tankabschnitt als Lufttank für das Nutzfahrzeug dient und als Queraussteifungskonstruktion wirkt. Der Lufttank und der Kraftstofftank können miteinander verbunden oder räumlich voneinander beabstandet sein.

Figur 2 zeigt eine Seitenansicht der Rahmentragstruktur 1 der Figur 1. Figur 2 ist insbesondere nochmals zu entnehmen, dass der Kraftstofftank T oben auf den Feder- und/oder Dämpferelementen der Radaufhängungen RA angeordnet ist und deren im Wesentlichen vertikalen Kräfte aufnimmt. Zu erwähnen ist, dass der Kraftstofftank T nicht direkt auf den Radaufhängungen RA gelagert sein muss, sondern auch z.B. benachbart zu diesen verlaufen kann.

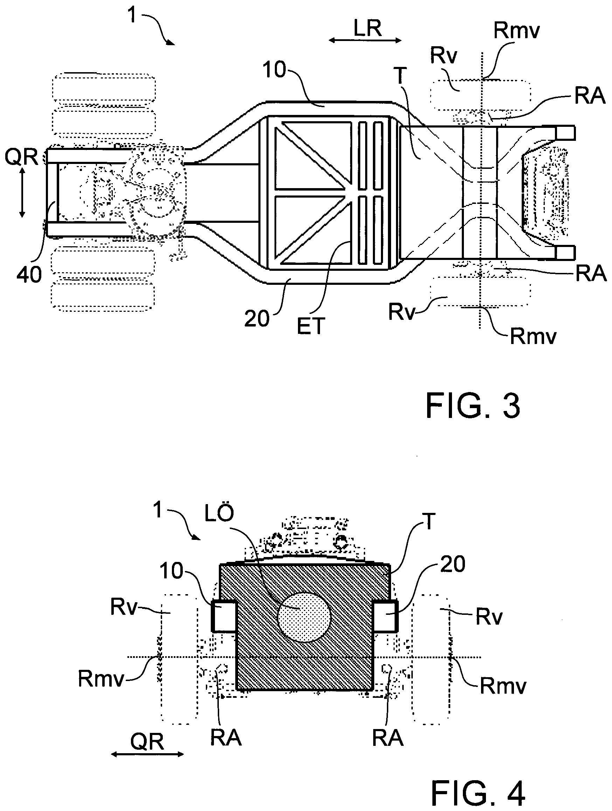

Figur 3 zeigt eine Draufsicht auf die Rahmentragstruktur 1 der Figuren 1 und 2. Figur 3 ist insbesondere zu entnehmen, dass der Kraftstofftank T abschnittsweise zwischen und auf der ersten Tragkonstruktion 10 und der zweiten Tragkonstruktion 20 angeordnet ist, zwischen Vorderrädern Rv für das Nutzfahrzeug verläuft und über deren Radmittelpunkte Rmv nach vorne hinaus ragt und zudem die erste Tragkonstruktion 10 und die zweite Tragkonstruktion 20 verbindet.

Figur 4 zeigt eine Schnittansicht der Rahmentragstruktur der Figuren 1 bis 3. Figur 4 ist insbesondere zu entnehmen, dass der Kraftstofftank T oben auf der ersten Tragkonstruktion 10 und der zweiten Tragkonstruktion 20 angeordnet ist und selbige miteinander verbindet und sich zudem bis unter die Radmittelpunkte Rmv der Vorderräder Rv nach unten erstreckt.

Der Kraftstofftank T ist in Längsrichtung LR vor vorzugsweise einem Dieselmotor als im Wesentlichen hohlplattenförmiges Teil positioniert, was in Bezug auf die Kühlung des Dieselmotors ggf. problematisch sein könnte. Deshalb kann der Kraftstofftank T mit einer Lüftungsöffnung LÖ versehen werden, die zur Kühlung des Dieselmotors dient.

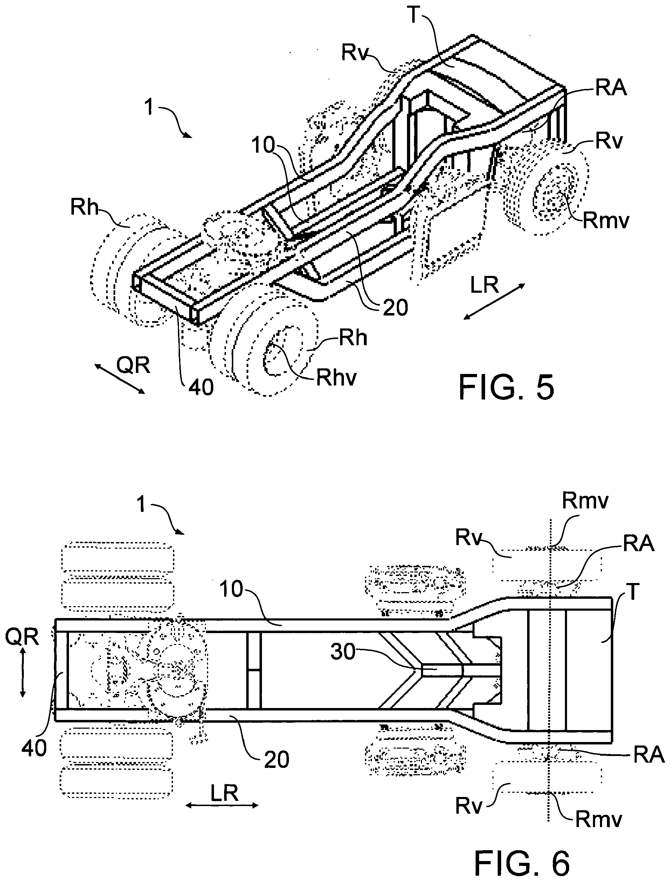

Figur 5 zeigt eine perspektivische Ansicht einer Rahmentragstruktur 1 gemäß einer anderen Ausführungsform der Erfindung. Eine Besonderheit der in Figur 5 gezeigten Rahmentragstruktur 1 ist, dass der Kraftstofftank T einen im Wesentlichen horizontal ausgerichteten Tankabschnitt umfasst, der die erste Tragkonstruktion 10 und die zweite Tragkonstruktion 20 verbindet. Zudem verläuft der horizontal ausgerichtete Tankabschnitt zwischen den Vorderrädern Rv, ragt über deren Radmittelpunkte Rmv nach vorne hinaus und ist im Wesentlichen auf dem Niveau der ersten Rahmentragstruktur 10 und der zweiten Rahmentragstruktur 20 angeordnet, um sie vorzugsweise seitlich innenliegend zu verbinden. Im Gegensatz zu der in den Figuren 1 bis 4 gezeigten Rahmentragstruktur verläuft der Kraftstofftank T somit nicht oben auf der ersten Tragkonstruktion 10 und der zweiten Tragkonstruktion 20, sondern quasi seitlich innenliegend entlang der ersten Rahmentragstruktur 10 und der zweiten Rahmentragstruktur 20.

Eine weitere Besonderheit ist auch in der in Figur 5 gezeigten Rahmentragstruktur 1, dass der Kraftstofftank T optional dazu genutzt werden kann, ein Fahrerhaus (nicht dargestellt) für das Nutzfahrzug zu tragen oder zumindest als Unterbau für das Fahrerhaus zu dienen. Ebenso kann der Kraftstofftank T optional dazu dienen, als Queraussteifungskonstruktion für die Rahmentragstruktur 1 zu wirken.

Die erste Tragkonstruktion 10 und die zweite Tragkonstruktion 20 sind in eine Oberzugkonstruktion und eine Unterzugkonstruktion aufgeteilt, die heckseitig zusammengeführt sind und frontseitig mit dem Kraftstofftank T verbunden sind.

Figur 6 zeigt eine Draufsicht auf die Rahmentragstruktur 1 aus Figur 5. Figur 6 ist insbesondere zu entnehmen, dass die Rahmentragstruktur 1 eine dritte längsverlaufende Tragkonstruktion 30 umfasst, die zwischen der ersten Tragkonstruktion 10 und der zweiten Tragkonstruktion 20 und unter deren Niveau verläuft. Die dritte Tragkonstruktion 30 verläuft zwischen den Vorderrädern Rv und ragt über deren Radmittelpunkte Rmv nach vorne hinaus. Die dritte Tragkonstruktion 30 ist als Rechteckhohlprofil ausgeführt.

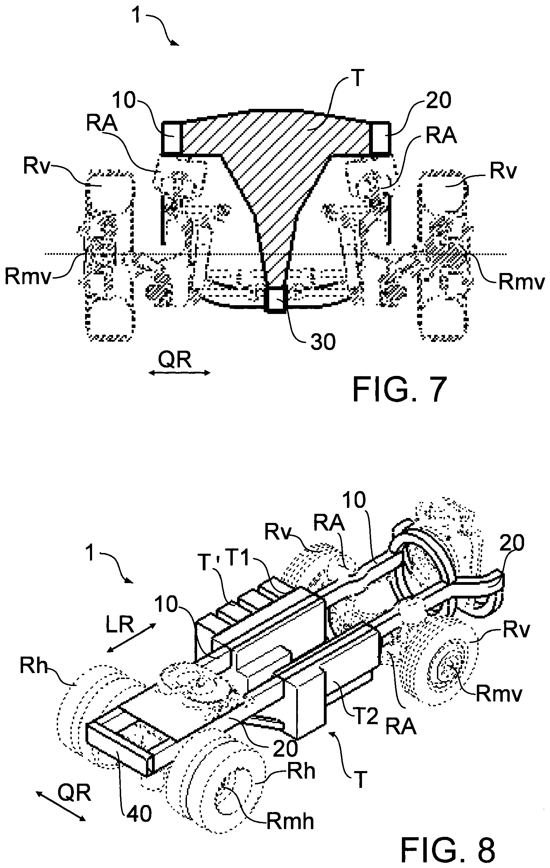

Figur 7 zeigt eine Schnittansicht der Rahmentragstruktur 1 der Figuren 5 und 6 in Längsrichtung LR nach vorne. Figur 7 ist z.B. zu entnehmen, dass der Kraftstofftank T einen im Wesentlichen horizontalen Tankabschnitt und einen von dem Tankabschnitt nach unten erstreckenden Tankabschnitt umfasst, die eine im Wesentlichen T- oder V-förmige Gestalt bilden. Zudem kann Figur 7 entnommen werden, dass die dritte Tragkonstruktion 30 zur Abstützung des Kraftstofftanks T dient und zur Aufnahme von Längs- und Querkräften aus den Lenkelementen der Radaufhängungen RA für die Vorderräder Rv. Ferner sind in der in Figur 7 gezeigten Rahmentragstruktur 1 die erste Tragkonstruktion 10 und die zweite Tragkonstruktion 20 oben auf oberen Enden der Feder- und/oder Dämpferelemente der Radaufhängungen RA für die Vorderräder Rv angeordnet.

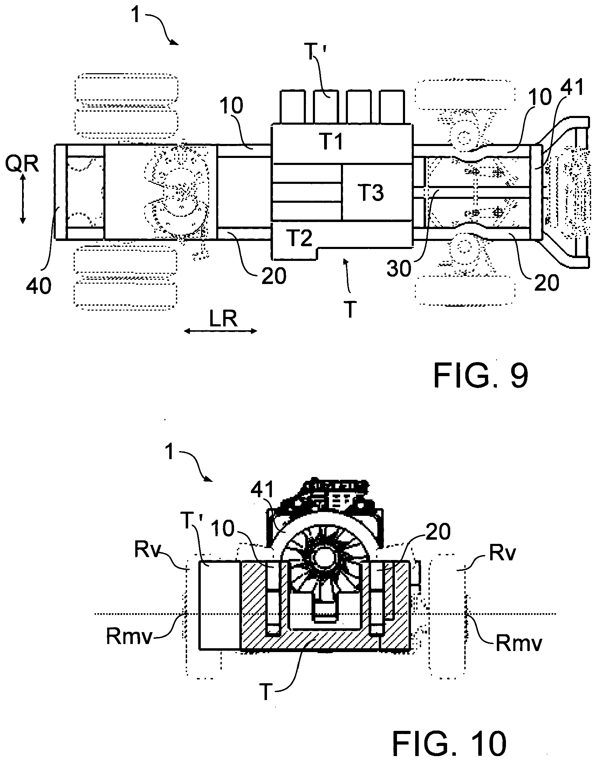

Figur 8 zeigt eine perspektivische Seitenansicht einer Rahmentragstruktur 1 gemäß einer wiederum anderen Ausführungsform der Erfindung. Der Kraftstofftank T weist Durchlassaussparungen auf, die von der ersten Tragkonstruktion 10 und der zweiten Tragkonstruktion 20 durchlaufen werden. Insbesondere umfasst der Kraftstofftank T einen ersten Tankabschnitt T1, der von der ersten Tragkonstruktion 10 durchlaufen wird und einen zweiten Tankabschnitt T2 der von der zweiten Tragkonstruktion 20 durchlaufen wird. Zudem umfasst der Kraftstofftank T einen dritten Tankabschnitt T3 (siehe z.B. Figur 3), der den ersten Tankabschnitt T1 und den zweiten Tankabschnitt T2 bodenseitig verbindet.
Der erste Tankabschnitt T1 und der zweite Tankabschnitt T2 sind als seitliche Schenkelteile ausgeführt und der dritte Tankabschnitt T3 ist als Bodenteil ausgeführt, die zusammen eine im Wesentlichen U-förmige Gestalt bilden (siehe z.B. Figur 10). Figur 8 zeigt außerdem einen Lufttank T', der seitlich außen an dem Kraftstofftank T angeordnet ist.

Figur 9 zeigt eine Draufsicht auf die Rahmentragstruktur 1 der Figur 8. Figur 9 ist insbesondere zu entnehmen, dass der Kraftstofftank T in Querrichtung QR mittig zwischen der ersten Tragkonstruktion 10 und der zweiten Tragkonstruktion 20 verläuft und die erste Tragkonstruktion 10 und die zweite Tragkonstruktion 20 miteinander verbindet. Die Kraftstofftank T dient z.B. dazu, eine Motoreinrichtung zum Antreiben des Nutzfahrzeugs (z.B. ein Verbrennungsmotor, Dieselmotor und/oder Elektromotor - nicht dargestellt in Figur 9) und optional eine Getriebeeinrichtung für das Nutzfahrzeug aufzunehmen und von unten und von seitlich außen einzufassen. Es ist ebenso möglich, dass die Motoreinrichtung und optional die Getriebeeinrichtung zwischen der ersten Tragkonstruktion 10, der zweiten Tragkonstruktion 20 und der dritten Tragkonstruktion 30 aufgenommen wird und vorzugsweise von der ersten Tragkonstruktion 10, der zweiten Tragkonstruktion 20 und der dritten Tragkonstruktion 30 getragen wird.

Figur 10 zeigt eine Schnittansicht der Rahmentragstruktur 1 der Figuren 8 und 9 in Längsrichtung LR nach vorne. Figur 10 ist u.a. zu entnehmen, dass die drei Tankabschnitte T1, T2 und T3 im Wesentlichen hohlplattenförmig ausgeführt sind und eine im Wesentlichen U-förmige Gestalt bilden. Figur 10 ist außerdem zu entnehmen, dass die erste Tragkonstruktion 10 und die zweite Tragkonstruktion 20 den Kraftstofftank T durchlaufen und der Kraftstofftank T die erste Tragkonstruktion 10 und die zweite Tragkonstruktion 20 von unten, von seitlich außen und zusätzlich von seitlich innen einfasst.

Zu erwähnen ist noch, dass die Tankeinrichtung T als mittragender Teil der Rahmentragstruktur 1 ausgeführt sein kann, z.B. als mittragender Teil der ersten Tragkonstruktion 10 und der zweiten Tragkonstruktion 20 dient, als Queraussteifungskonstruktion dient, als Tragvorrichtung zum Tragen einer Motor- und/oder Getriebeeinrichtung dient, als Tragvorrichtung zum Tragen eines Fahrerhauses dient und/oder zur Aufnahme von Radaufhängungskräften der Radaufhängungen für die Vorderräder des Nutzfahrzeugs dient. Zu diesen Zweck kann die Tankeinrichtung T mit Verstärkungsmitteln versehen sein, z.B. Verstärkungsverstrebungen, Verstärkungsrippen, Verstärkungsplatten, etc..

## Patentansprüche

1. Rahmentragstruktur (1) für ein Nutzfahrzeug, insbesondere einen Lastkraftwagen, vorzugsweise eine Sattelzugmaschine, mit:
- einer ersten längsverlaufenden Tragkonstruktion (10) und einer zweiten längsverlaufenden Tragkonstruktion (20), die in Querrichtung (QR) der Rahmentragstruktur (1) voneinander beabstandet sind, und
- zumindest einer Tankeinrichtung (T) zur Fluidaufnahme, insbesondere eine Kraftstofftankeinrichtung zur Aufnahme eines Kraftstoffs zum Betrieb einer Motoreinrichtung und/oder einer Lufttankeinrichtung (T') zur Aufnahme von Luft,
wobei
- die Tankeinrichtung (T) zumindest abschnittsweise zwischen der ersten Tragkonstruktion (10) und der zweiten Tragkonstruktion (20) angeordnet ist,
wobei
- die Tankeinrichtung (T) zumindest abschnittsweise zwischen Vorderrädern (Rv) für das Nutzfahrzeug verläuft, **dadurch gekennzeichnet, dass** die Tankeinrichtung (T) über Radmittelpunkte (Rmv) der Vorderräder nach vorne hinaus ragt.

2. Rahmentragstruktur (1) nach Anspruch 1, **dadurch gekennzeichnet, dass** die Tankeinrichtung (T) zumindest abschnittsweise zwischen Hinterrädern (Rh) für das Nutzfahrzeug verläuft und vorzugsweise über deren Radmittelpunkte (Rmv) nach hinten hinaus ragt.

3. Rahmentragstruktur (1) nach einem der vorhergehenden Ansprüche, **dadurch gekennzeichnet, dass** die Tankeinrichtung (T) von der ersten Tragkonstruktion (10) zu der zweiten Tragkonstruktion (20) verläuft und die erste Tragkonstruktion (10) mit der zweiten Tragkonstruktion (20) verbindet.

4. Rahmentragstruktur (1) nach einem der vorhergehenden Ansprüche, **dadurch gekennzeichnet, dass** die Tankeinrichtung (T) abschnittsweise in Querrichtung (QR) der Rahmentragstruktur (1) mittig zwischen der ersten Tragkonstruktion (10) und der zweiten Tragkonstruktion (20) angeordnet ist.

5. Rahmentragstruktur (1) nach einem der vorhergehenden Ansprüche, **dadurch gekennzeichnet, dass** die Tankeinrichtung (T) die erste Tragkonstruktion (10) und die zweite Tragkonstruktion (20) abschnittsweise einfasst, vorzugsweise von unten und/oder von seitlich außen.

6. Rahmentragstruktur (1) nach einem der vorhergehenden Ansprüche, **dadurch gekennzeichnet, dass** die Tankeinrichtung (T) Durchlassaussparungen aufweist, die von der ersten Tragkonstruktion (10) und der zweiten Tragkonstruktion (20) durchlaufen werden.

7. Rahmentragstruktur (1) nach einem der vorhergehenden Ansprüche, **dadurch gekennzeichnet, dass** die Tankeinrichtung (T) unter einer Getriebeeinrichtung und/oder einer Motoreinrichtung für das Nutzfahrzeug verläuft.

8. Rahmentragstruktur (1) nach einem der vorhergehenden Ansprüche, **dadurch gekennzeichnet, dass** die Tankeinrichtung (T) dazu dient, eine Antriebsstrangeinheit aufzunehmen und vorzugsweise zumindest abschnittsweise einzufassen, vorzugsweise von unten und/oder von seitlich außen.

9. Rahmentragstruktur (1) nach einem der vorhergehenden Ansprüche, **dadurch gekennzeichnet, dass** die Tankeinrichtung (T) aus zumindest einem im Wesentlichen hohlplattenförmigen Tankabschnitt ausgebildet wird.

10. Rahmentragstruktur (1) nach einem der vorhergehenden Ansprüche, **dadurch gekennzeichnet, dass** die Tankeinrichtung (T)
- ein Bodenteil und zwei äußere Schenkelteile umfasst, die vorzugsweise eine im Wesentlichen U-förmige Gestalt bilden, oder
- einen im Wesentlichen horizontalen Flanschteil und einen von dem Flanschteil erstreckenden Stegteil umfasst, die vorzugsweise eine im Wesentlichen L-, T- oder V-förmige Gestalt bilden.

11. Rahmentragstruktur (1) nach einem der vorhergehenden Ansprüche, **dadurch gekennzeichnet, dass** die Rahmentragstruktur (1) eine dritte längsverlaufende Tragkonstruktion (30) umfasst, die zwischen der ersten Tragkonstruktion (10) und der zweiten Tragkonstruktion (20) verläuft und vorzugsweise unter deren Niveau.

12. Rahmentragstruktur (1) nach Anspruch 11, **dadurch gekennzeichnet, dass** die dritte Tragkonstruktion (30) zur Abstützung der Tankeinrichtung (T) und/oder einer Motoreinrichtung zum Antreiben des Nutzfahrzeugs dient.

13. Rahmentragstruktur (1) nach einem der vorhergehenden Ansprüche, **dadurch gekennzeichnet, dass** die dritte Tragkonstruktion (30) ein U- oder I-Profilelement oder ein Hohlprofilelement umfasst.

14. Rahmentragstruktur (1) nach einem der vorhergehenden Ansprüche, **dadurch gekennzeichnet, dass** die erste Tragkonstruktion (10) und die zweite Tragkonstruktion (20) in eine Oberzugkonstruktion und eine Unterzugkonstruktion aufgeteilt sind.

15. Rahmentragstruktur (1) nach einem der vorhergehenden Ansprüche, **dadurch gekennzeichnet, dass** die Tankeinrichtung (T) als Unterbau für das Fahrerhaus dient.

16. Rahmentragstruktur (1) nach einem der vorergehenden Ansprüche, **dadurch gekennzeichnet, dass** die Tankeinrichtung (T) mit zumindest einer Lüftungsöffnung (LÖ) versehen ist, die insbesondere zur Kühlung einer Motoreinrichtung zum Antreiben des Nutzfahrzeugs dient.

17. Rahmentragstruktur (1) nach einem der vorhergehenden Ansprüche, **dadurch gekennzeichnet, dass** die Tankeinrichtung (T) oben auf Feder- und/oder Dämpferelementen der Radaufhängungen (RA) für die Vorderräder (Rv) des Nutzfahrzeugs angeordnet ist und/oder oben auf der ersten Tragkonstruktion (10) und der zweiten Tragkonstruktion (20) angeordnet ist.

18. Rahmentragstruktur (1) nach einem der vorhergehenden Ansprüche, **dadurch gekennzeichnet, dass** die Rahmentragstruktur (1) zumindest eine Queraussteifungskonstruktion (T) umfasst, die zusätzlich als Lufttank für das Nutzfahrzeug dient, und/oder die im Wesentlichen hohlplattenförmig ausgebildet ist.

19. Nutzfahrzeug, insbesondere Lastkraftwagen, vorzugsweise Sattelzugmaschine, **gekennzeichnet durch** eine Rahmentragstruktur (1) nach einem der vorhergehenden Ansprüche.

## Claims

1. A supporting frame structure (1) for a utility vehicle, in particular a heavy goods vehicle, preferably a semitrailer tractor, having:
- a first longitudinally running supporting construction (10) and a second longitudinally running supporting construction (20), said supporting constructions being spaced apart from one another in a transverse direction (QR) of the supporting frame structure (1), and
- at least one tank device (T) for accommodating fluid, in particular a fuel tank unit for accommodating a fuel for the operation of a motor unit and/or an air tank unit (T') for accommodating air,
wherein
- the tank unit (T) is arranged at least in sections between the first supporting construction (10) and the second supporting construction (20),
wherein
- the tank unit (T) runs at least in sections between front wheels (Rv) for the utility vehicle, **characterized in that** the tank unit (T) projects forwards beyond wheel central points (Rmv) of the front wheels.

2. The supporting frame structure (1) according to Claim 1, **characterized in that** the tank unit (T) runs at least in sections between rear wheels (Rh) for the utility vehicle and preferably projects rearwards beyond the wheel central points (Rmv) thereof.

3. The supporting frame structure (1) according to one of the preceding claims, **characterized in that** the tank unit (T) runs from the first supporting construction (10) to the second supporting construction (20) and connects the first supporting construction (10) to the second supporting construction (20).

4. The supporting frame structure (1) according to one of the preceding claims, **characterized in that** the tank unit (T) is arranged in sections centrally between the first supporting construction (10) and the second supporting construction (20) in the transverse direction (QR) of the supporting frame structure (1).

5. The supporting frame structure (1) according to one of the preceding claims, **characterized in that** the tank unit (T) encloses the first supporting construction (10) and the second supporting construction (20) in sections, preferably from below and/or laterally from the outside.

6. The supporting frame structure (1) according to one of the preceding claims, **characterized in that** the tank unit (T) has passage cutouts through which the first supporting construction (10) and the second supporting construction (20) extend.

7. The supporting frame structure (1) according to one of the preceding claims, **characterized in that** the tank unit (T) runs under a transmission unit and/or a motor unit for the utility vehicle.

8. The supporting frame structure (1) according to one of the preceding claims, **characterized in that** the tank unit (T) serves to accommodate a drivetrain unit and preferably enclose the latter at least in sections, preferably from below and/or laterally from the outside.

9. The supporting frame structure (1) according to one of the preceding claims, **characterized in that** the tank unit (T) is formed from at least one tank portion which is substantially of hollow plate form.

10. The supporting frame structure (1) according to one of the preceding claims, **characterized in that** the tank device (T)
- comprises a base part and two outer limb parts which preferably form a substantially U-shaped configuration, or
- a substantially horizontal flange part and a web part extending from the flange part, which flange part and web part preferably form a substantially L-shaped, T-shaped or V-shaped configuration.

11. The supporting frame structure (1) according to one of the preceding claims, **characterized in that** the supporting frame structure (1) comprises a third longitudinally running supporting construction (30) which runs between the first supporting construction (10) and the second supporting construction (20) and preferably below the level thereof.

12. The supporting frame structure (1) according to Claim 11, **characterized in that** the third supporting construction (30) serves for supporting the tank unit (T) and/or a motor unit for driving the utility vehicle.

13. The supporting frame structure (1) according to one of the preceding claims, **characterized in that** the third supporting construction (30) comprises a U-shaped or I-shaped profile element or a hollow profile element.

14. The supporting frame structure (1) according to one of the preceding claims, **characterized in that** the first supporting construction (10) and the second supporting construction (20) are divided into an upper construction strand and a lower construction strand.

15. The supporting frame structure (1) according to one of the preceding claims, **characterized in that** the tank unit (T) serves as a substructure for the driver's cab.

16. The supporting frame structure (1) according to one of the preceding claims, **characterized in that** the tank unit (T) is provided with at least one ventilation opening (LÖ) which serves in particular for the cooling of a motor unit for driving the utility vehicle.

17. The supporting frame structure (1) according to one of the preceding claims, **characterized in that** the tank unit (T) is arranged on top of spring and/or damper elements of the wheel suspension units (RA) for the front wheels (Rv) of the utility vehicle and/or on top of the first supporting construction (10) and the second supporting construction (20).

18. The supporting frame structure (1) according to one of the preceding claims, **characterized in that** the supporting frame structure (1) comprises at least one transverse stiffening construction (T) which additionally serves as an air tank for the utility vehicle and/or which is substantially of hollow plate form.

19. A utility vehicle, in particular heavy goods vehicle, preferably semitrailer tractor, **characterized by** a supporting frame structure (1) according to one of the preceding claims.

## Revendications

1. Structure de châssis (1) pour un véhicule utilitaire, en particulier un camion, de préférence un tracteur de semi-remorque, avec
- une première construction portante longitudinale (10) et une deuxième construction portante longitudinale (20), qui sont espacées l'une de l'autre dans la direction transversale (QR) de la structure de châssis (1), et
- au moins un arrangement de réservoir (T) destiné à contenir un fluide, en particulier un arrangement de réservoir de carburant destiné à contenir du carburant pour le fonctionnement d'un arrangement de moteur et/ou un arrangement de réservoir d'air (T') destiné à contenir de l'air,
dans laquelle
- l'arrangement de réservoir (T) est disposé au moins en partie entre la première construction portante (10) et la deuxième construction portante (20),
dans laquelle
- l'arrangement de réservoir (T) s'étend au moins en partie entre des roues avant (Rv) pour le véhicule utilitaire,
**caractérisée en ce que** l'arrangement de réservoir (T) déborde vers l'avant au-delà des points centraux de roue (Rmv) des roues avant.

2. Structure de châssis (1) selon la revendication 1,
**caractérisée en ce que** l'arrangement de réservoir (T) s'étend au moins en partie entre des roues arrière (Rh) pour le véhicule utilitaire et déborde vers l'arrière de préférence au-delà de leurs points centraux de roue (Rmv).

3. Structure de châssis (1) selon l'une quelconque des revendications précédentes, **caractérisée en ce que** l'arrangement de réservoir (T) s'étend de la première construction portante (10) à la deuxième construction portante (20) et relie la première construction portante (10) à la deuxième construction portante (20).

4. Structure de châssis (1) selon l'une quelconque des revendications précédentes, **caractérisée en ce que** l'arrangement de réservoir (T) est disposé en partie, dans la direction transversale (QR) de la structure de châssis (1), au milieu entre la première construction portante (10) et la deuxième construction portante (20).

5. Structure de châssis (1) selon l'une quelconque des revendications précédentes, **caractérisée en ce que** l'arrangement de réservoir (T) entoure en partie la première construction portante (10) et la deuxième construction portante (20), de préférence par le bas et/ou latéralement par l'extérieur.

6. Structure de châssis (1) selon l'une quelconque des revendications précédentes, **caractérisée en ce que** l'arrangement de réservoir (T) présente des évidements de passage, qui sont traversés par la première construction portante (10) et par la deuxième construction portante (20).

7. Structure de châssis (1) selon l'une quelconque des revendications précédentes, **caractérisée en ce que** l'arrangement de réservoir (T) s'étend en dessous d'un dispositif de transmission et/ou d'un arrangement de moteur pour le véhicule utilitaire.

8. Structure de châssis (1) selon l'une quelconque des revendications précédentes, **caractérisée en ce que** l'arrangement de réservoir (T) sert à héberger une unité de chaîne cinématique et à l'entourer de préférence au moins en partie, de préférence par le bas et/ou latéralement par l'extérieur.

9. Structure de châssis (1) selon l'une quelconque des revendications précédentes, **caractérisée en ce que** l'arrangement de réservoir (T) est formé d'au moins une partie de réservoir de forme essentiellement plate creuse.

10. Structure de châssis (1) selon l'une quelconque des revendications précédentes, **caractérisée en ce que** l'arrangement de réservoir (T)
- comprend une partie de fond et deux parties de branches extérieures, qui forment de préférence une configuration essentiellement en forme de U, ou
- comprend une partie d'aile essentiellement horizontale et une partie d'âme s'étendant à partir de la partie d'aile, qui forment de préférence une configuration essentiellement en forme de L, de T ou de V.

11. Structure de châssis (1) selon l'une quelconque des revendications précédentes, **caractérisée en ce que** la structure de châssis (1) comprend une troisième construction portante longitudinale (30), qui s'étend entre la première construction portante (10) et la deuxième construction portante (20) et de préférence en dessous du niveau de celles-ci.

12. Structure de châssis (1) selon la revendication 11, **caractérisée en ce que** la troisième construction portante (30) sert à soutenir l'arrangement de réservoir (T) et/ou un arrangement de moteur pour l'entraînement du véhicule utilitaire.

13. Structure de châssis (1) selon l'une quelconque des revendications précédentes, **caractérisée en ce que** la troisième construction portante (30) comprend un élément de profilé en U ou en I ou un élément de profilé creux.

14. Structure de châssis (1) selon l'une quelconque des revendications précédentes, **caractérisée en ce que** la première construction portante (10) et la deuxième construction portante (20) sont divisées en une construction de longeron supérieur et une construction de longeron inférieur.

15. Structure de châssis (1) selon l'une quelconque des revendications précédentes, **caractérisée en ce que** l'arrangement de réservoir (T) sert de soubassement pour la cabine du conducteur.

16. Structure de châssis (1) selon l'une quelconque des revendications précédentes, **caractérisée en ce que** l'arrangement de réservoir (T) est doté d'au moins une ouverture d'aération (LÖ), qui sert en particulier pour le refroidissement d'un arrangement de moteur pour l'entraînement du véhicule utilitaire.

17. Structure de châssis (1) selon l'une quelconque des revendications précédentes, **caractérisée en ce que** l'arrangement de réservoir (T) est disposé en haut sur des éléments de suspension et/ou d'amortissement des suspensions de roues (RA) pour les roues avant (Rv) du véhicule utilitaire et/ou en haut sur la première construction portante (10) et la deuxième construction portante (20).

18. Structure de châssis (1) selon l'une quelconque des revendications précédentes, **caractérisée en ce que** la structure de châssis (1) comprend au moins une construction de renforcement transversale (T), qui sert en outre de réservoir d'air pour le véhicule utilitaire, et/ou qui est réalisée sous forme essentiellement plate creuse.

19. Véhicule utilitaire, en particulier camion, de préférence tracteur de semi-remorque, **caractérisé par** une structure de châssis (1) selon l'une quelconque des revendications précédentes.
